# EUROPÄISCHE PATENTSCHRIFT

(11) **EP 2 297 534 B1**
(45) Veröffentlichungstag und Bekanntmachung des Hinweises auf die Patenterteilung: **22.07.2020**
(21) Anmeldenummer: 09757483.4
(22) Anmeldetag: 29.05.2009
(51) Int. Cl.: F25D 23/06

(54) **HAUSHALTSGERÄT, INSBESONDERE KÄLTEGERÄT, SOWIE VERFAHREN ZUR DESSEN HERSTELLUNG**
DOMESTIC APPLIANCE IN PARTICULAR REFRIGERATOR AND METHOD FOR PRODUCING IT
APPAREIL MÉNAGER, EN PARTICULIER APPAREIL FRIGORIFIQUE, ET SON PROCÉDÉ DE PRODUCTION

(30) Priorität: 03.06.2008 DE 102008026528
(43) Veröffentlichungstag der Anmeldung: 23.03.2011
(73) Patentinhaber: BSH Hausgeräte GmbH, 81739 München (DE)
(72) Erfinder: SCHILK, Andreas, 89520 Heidenheim (DE); STELZER, Jörg, 89537 Giengen (DE)
(86) Internationale Anmeldenummer: PCT/EP2009/056641
(87) Internationale Veröffentlichungsnummer: WO 2009/147102

(56) Entgegenhaltungen:
- EP-A- 1 510 747
- EP-A- 1 724 513
- DE-U1- 29 613 093
- JP-A- 4 260 780
- JP-A- 6 194 031
- JP-A- 58 106 374
- JP-A- 60 174 473
- JP-A- 2002 243 091
- JP-A- 2003 314 951
- JP-A- 2004 020 149
- JP-A- 2005 283 059
- JP-A- 2007 155 279
- JP-U- 61 023 683

## Beschreibung

Die vorliegende Erfindung betrifft ein Haushaltsgerät, insbesondere Kältegerät, aufweisend einen Korpus mit einem Innenbehälter und Geräteaußenwänden, sowie einer dazwischen liegenden Isolationsschicht mit mindestens einem eingelagerten Vakuumisolationspaneel.

Aus der DE 296 13 093 U1 ist ein fixiertes Vakuumisolierpaneel sowie ein dieses fixierte Vakuumisolierpaneel enthaltendes Kühlmöbelelement bekannt. Die dortige Anordnung, besteht aus einer starren Platte und einem Vakuumisolierpaneel, wobei das Vakuumisolierpaneel durch einen als flüssiges Reaktionsgemisch aufgebrachten PolyurethanSchaum auf der starren Platte fixiert ist. Zur Fixierung wird ein Vakuumisolierpaneel mittig zentriert in eine Stahlkassette, die mit einem umgefalzten Rand versehen ist, eingelegt. Ein umlaufender Spalt zwischen Stahlkassette und Vakuumisolierpaneel wird mit Polyurethan-Einkomponentenschaum ausgefüllt. Alternativ wird dort vorgeschlagen, das Vakuumisolierpaneel mit einer Aluminiumplatte zu verbinden, auf der Aluminiumrohre schlangenförmig aufgeschweißt sind. Auf die Blechseite, auf der die Rohre aufgeschweißt sind, wird ein Polyurethan-Reaktionsgemisch aufgebracht. Während des Aufschäumvorganges wird das Vakuumisolierpaneel auf das aufsteigende Reaktionsgemisch aufgelegt. Nach dem Aushärten des Schaumes hat die mit den Aluminiumrohren belegte Platte sich fest mit dem Vakuumisolierpaneel verbunden.

Aus der JP 58 106374 A ist ein Kältegerät bekannt, das eine Geräteaußenwand und ein Vakuumisolationspaneel aufweist, wobei das Vakuumisolationspaneel mittels einer Flüssighaftmittelschicht an einer Innenseite der Geräteaußenwand befestigt ist.

Aufgabe der Erfindung ist es, gattungsgemäße Haushaltsgeräte, insbesondere Kältegeräte in hoher Qualität kostengünstig herstellen zu können.

Die Aufgabe wird durch ein Haushaltsgerät, insbesondere Kältegerät mit den Merkmalen des Anspruchs 1 gelöst.

Indem das mindestens eine Vakuumisolationspaneel mittels einer Flüssighaftmittelschicht flächig an einer Innenseite einer Geräteaußenwand oder an einer der Wärmeisolation des Gerätes zugewandten Außenseite des Innenbehälters festgesetzt ist, können aufwendige Befestigungsmittel entfallen und gleichzeitig insbesondere eine Ebenmäßigkeit der Geräteaußenwände gewährleistet werden. Vorzugsweise betrifft die Erfindung Kältegeräte, sie kann jedoch auch bei anderen Haushaltsgeräten, wie beispielsweise Klimageräten, eingesetzt werden, welche Vakuumisolationspaneelen verwenden.

Als Vakuumisolationspaneele werden Wärmedammplatten verstanden, die durch Evakuieren eines Körperhohlraumes eine reduzierte Wärmeleitfähigkeit aufweisen. Generell umfassen Vakuumisolationspaneele eine Hülle, die eine hohe Dichtigkeit gegen Gasdurchtritt aufweist. Die Hülle wird mit porösen Kernmaterial gefüllt. Das Kernmaterial bildet nach dem Evakuieren der Hülle einen festen Stützkörper. Üblicherweise wird zur Erzielung eines möglichst geringen Restgasgehaltes ein offenporiges Kernmaterial verwendet, aus dem enthaltene Gase möglichst vollständig heraus evakuiert werden können. Die hohe wärmeisolierende Wirkung der Vakuumisolationspaneele wird überwiegend durch das Evakuieren erreicht. Daneben soll der Stützkörper einer Vakuumdämmplatte eine möglichst kleine Festkörper- und Strahlungswärmeleitfähigkeit aufweisen. Verschiedene Materialarten sind in dieser Hinsicht als Stützkörper für die Herstellung von Vakuumdämmplatten geeignet. So können beispielsweise mikroporöse Kieselsäuren, insbesondere pyrogene Kieselsäuren und Perlite, aber auch Mikro-/Cellulose-Fasermaterialien oder offenporige Kunststoffschäume verwendet werden. Eine weitere Anforderung an das Material für den Stützkörper und insbesondere für deren Formbeständigkeit ist die Druckbelastbarkeit. Mit zunehmender Evakuierung steigt nämlich die Druckbelastung von Außen auf die Hülle des Vakuumisolationspaneels aufgrund des Umgebungsluftdruckes. Dieser Druckbelastung sollte das Stützkörpermaterial standhalten können. Die Wärmeisolationsbeständigkeit hängt im wesentlichen von der Gas- und Wasserdampfsperrfähigkeit der Hülle ab. Gas oder Wasserdampf, der durch die Hülle hindurch diffundiert, reduziert das Vakuum in dem Vakuumisolationspaneel, wodurch die wärmeisolierende Wirkung verloren ginge. Üblicherweise werden deshalb Aluminiumverbundfolien als Hülle verwendet. Wegen der hohen Wärmeleitfähigkeit von Aluminium sollten möglichst dünne Aluminiumschichten vorgesehen werden. Die Aluminiumschicht dient im wesentlichen dazu Wärmestrahlung zu reflektieren. Die Gas- und Wasserdampfsperrfähigkeit wird überwiegend durch Kunststoffschichten erzielt. Die Kunststoffschichten sollen auch eine sehr hohe Materialfestigkeit aufweisen, so dass mechanische Beschädigungen möglichst nicht auftreten, die ein Eindringen von Luft in das Innere des Vakuumisolationspaneel zur Folge hätten und dadurch die wärmeisolierende Wirkung in diesem belüfteten Zustand verloren ginge. Im allgemeinen werden Vakuumisolationspaneele in vorzugsweise rechteckiger Plattenform hergestellt.

Während des Evakuierens eines Vakuumisolationspaneels legt sich die Hülle mitunter nicht völlig ebenmäßig an den Stützkörper an, so dass es zur Bildung von Falten der Hülle kommen kann. Im Ergebnis führt dies zu unebenen Vakuumisolationspaneelen. Daneben kann es insbesondere bei schüttgutartigen Kernmaterialien zu Unebenheiten des durch das Evakuieren gebildeten Stützkörpers kommen. Auch dies führt zu unebenen Vakuumisolationspaneelen. Problematisch an einer Unebenheit des Vakuumisolationspaneels ist es, dass im Zuge der fertigungstechnischen Befestigung des Vakuumisolationspaneels an der Innenseite einer Geräteaußenwand die Unebenheit des Vakuumisolationspaneels sich auf der sichtbaren Außenseite der Geräteaußenwand abzeichnen können oder es aufgrund der Unebenheit des Vakuumisolationspaneels zu Spannungen in der Geräteaußenwand kommt, was zu einem unebenen und insbesondere welligen Erscheinungsbild der Geräteaußenwand führt.

Um die Qualität des Kältegerätes zu steigern, soll nicht nur sichergestellt sein, dass das Erscheinungsbild der Geräteaußenwand optisch einwandfrei ist, sondern das Kältegerät soll auch kostengünstig herstellbar und dann auch energieeffizient zu betreiben sein. Im Stand der Technik kann zwar durch ein zwischen Vakuumisolationspaneel und Geräteaußenwand eingelegtes zusätzliches Blech das optische Erscheinungsbild verbessern, das Einlegen eines zusätzlichen Bleches erhöht jedoch die Herstellkosten und das Gewicht des fertigen Kältegerätes. Gleiches gilt für Lösungen, bei denen statt eines zusätzlich eingelegten Bleches die Geräteaußenwand deutlich dicker ausgeführt wird. Teilweise werden die Vakuumisolationspaneele auch in Metallkassetten eingefügt und die Metallkassette an der Geräteaußenwand befestigt. Bei einer Befestigung des Vakuumisolationspaneels oder der Metallkassette durch eine rahmenartig umlaufende Polyurethanschaum-Kleberaupe kommt es zu Lufteinschlüssen zwischen Vakuumisolationspaneel und Geräteaußenwand. Aufgrund der hohen Anforderungen an die Energieeffizienz und damit an die Isolierleistung von modernen Kältegeräten, sollen Lufteinschlüsse, welche Wärmebrücken darstellen, verhindert bzw. weitgehend vermieden werden. Lufteinschlüsse können insbesondere dadurch verhindert bzw. weitgehend vermieden werden, dass das Vakuumisolationspaneel mittels einer Schicht aus Flüssighaftmittel an einer Innenseite einer Geräteaußenwand oder einer Außenseite einer Innenbehälterwand flächig festgesetzt wird. Durch die zwischen Vakuumisolationspaneel und Innenseite der Geräteaußenwand eingebrachte Flüssighaftmittelschicht wird nicht nur das Vakuumisolationspaneel mit der Geräteaußenwand oder dem Innenbehälter adhesiv verbunden, sondern gleichzeitig eine Zwischenschicht geschaffen, welche Unebenheiten ausgleicht, wie sie beispielsweise durch Falten in der Hülle des Vakuumisolationspaneels oder durch Anformungen am Innenbehälter, z.B. durch Rippenfelder, vorgegeben sind. Unebenheiten können jedoch nicht nur von Falten in der Hülle entstehen, sondern beispielsweise dann, wenn zwei oder mehrere starre Stützkörperbauteile in einer gemeinsamen Hülle evakuiert werden. Dabei kann es durch Lageungenauigkeiten zweier Stützkörperbauteile zueinander zu stufenartigen Kanten in der Fläche des Vakuumisolationspaneels kommen, die sich nach dem Evakuieren an der Außenseite der Hülle darstellen.

In allen Varianten der Erfindung kann die Flüssighaftmittelschicht eine Mindestdicke von 3 Millimetern (mm) aufweisen. Mit einer Mindestdicke von 3 mm können alle auftretenden Unebenheiten und Lageungenauigkeiten zumindest an der Geräteaußenwand ausgeglichen werden. Eine Dicke der Schaumschicht von mehr als 3 mm kann auch realisiert werden und eignet sich dann zum Ausgleich der Unebenheiten am Innenbehälter. Wegen der zunehmenden Dicke ist mehr Schaummaterial erforderlich und die Reaktionszeit steigt an. So sollte von einer Dicke von 3mm nur geringfügig nach oben abgewichen werden. Eine zunehmende Reaktionszeit bedeutet nämlich auch eine verlängerte Herstellzeit, was im Ergebnis zu höheren Herstellkosten führt. Wirtschaftlich sinnvoll kann deshalb eine Dicke zwischen 3 und 4 mm sein.

Unter aushärtbaren Flüssighaftmitteln sollen Stoffe und Stoffgemische verstanden sein, die nach ihrer Reaktion mit Luftsauerstoff oder einer anderen Reaktionskomponente von ihrem flüssigen, teigigen Zustand sich zumindest bis in einen zähelastischen Zustand, aber vorzugsweise harten Zustand verfestigen. Die Flüssighaftmittelschicht ist in Form einer aufschäumbaren Wärmeisolationsschicht ausgebildet. Die Flüssighaftmittelschicht kann sich vorzugsweise vollflächig zwischen Vakuumisolationspaneel und Innenseite der Geräteaußenwand erstrecken. Durch eine vollflächige Erstreckung der Flüssighaftmittelschicht ist sichergestellt, dass die gesamte Fläche, mit der das Vakuumisolationspaneel an der Geräteaußenwand anliegt, frei von Lufteinschlüssen bleibt. Durch die vollflächige Verbindung mittels der Flüssighaftmittelschicht sind somit Wärmebrücken zwischen Vakuumisolationspaneel und Geräteaußenwand verhindert und eine maximal mögliche Wärmeisolationswirkung gewährleistet.

Die Flüssighaftmittelschicht erstreckt sich vollflächig über eine der Innenseite der Geräteaußenwand zugewandten Frontseite des Vakuumisolationspaneel und dessen Seitenwände. Üblicherweise werden die Hüllen von Vakuumisolationspaneelen aus taschenartigen Verbundfolien gebildet. Nachdem das poröse Kernmaterial, ob schüttfähig oder als Festkörperbauteil in die Tasche eingebracht worden ist, wird die Hülle nach dem Evakuieren an seiner offenen Seite gas- und wasserdampfdicht verschlossen. Das Schließen der taschenartigen Hülle erfolgt meist durch Versiegeln entlang eines Randabschnitts der taschenartigen Hülle. Die versiegelte Hülle weist dann einen nahtartigen Siegelabschnitt auf, der entweder um einige Millimeter bis zu einem Zentimeter von der Hülle absteht oder durch Umlegen bzw. Umfalzen des nahtartigen Siegelabschnitts an den Hüllkörper angelegt wird. Das Anlegen des nahtartigen Siegelabschnitt erfolgt an einer Seitenwand des Vakuumisolationspaneels. Folglich entstehen auch an den Seitenwänden des Vakuumisolationspaneels Falten oder sogar hinterschnittene Hohlkammern zwischen der umgelegten Siegelnaht und dem Vakuumisolationspaneel-Körper. Dort könnten Lufteinschlüsse verbleiben, die eine Wärmebrücke bilden und die Wärmeisolationsfähigkeit beeinträchtigen. Indem erfindungsgemäß sich die Schaumschicht vollflächig nicht nur über eine der Innenseite der Geräteaußenwand zugewandten Frontseite des Vakuumisolationspaneel, sondern auch dessen Seitenwände erstreckt, können Lufteinschlüsse auch auf den Seitenwänden verhindert werden. Durch das erfindungsgemäße Vorschäumen werden auch die Seitenwände des Vakuumisolationspaneels vorbeschäumt, wodurch eine gleichmäßige lufteinschlussfreie Zwischenschicht geschaffen wird. Während des eigentlichen Hauptschäumvorgangs wird eine Isolationsschaumschicht erzeugt, welche das Vakuumisolationspaneel zusammen mit der Geräteaußenwand einschäumt. Der noch flüssige Isolationsschaum legt sich dabei unmittelbar an die Vorschäumschicht der Seitenwände des Vakuumisolationspaneels an. Weder Falten des Vakuumisolationspaneels, noch der seitliche nahtartige Siegelabschnitt des Vakuumisolationspaneels wird von der Vorschäumschicht erreicht oder beeinflusst. So können während des eigentlichen HauptSchäumvorgangs keine Lufteinschlüsse entstehen. Insgesamt ist erfindungsgemäß vorgesehen, die Vakuumisolationspaneele in einem dem Hauptschäumvorgang zur Herstellung eines wärmeisolierten Haushaltsgerätes vorgelagerten Vorschäumprozess an die Innenseite der Geräteaußenwände des Haushaltsgerätes anzuschäumen.

Durch das Anbringen der Vakuumisolationspaneele an die Innenseiten der Geräteaußenwände ergibt sich eine Material- und Kosteneinsparung, da auf zusätzliche Versteifungsbleche oder dickere Geräteaußenwände verzichtet werden kann. Die erfindungsgemäße Flüssighaftmittelschicht zwischen Vakuumisolationspaneel und Geräteaußenwand ergibt ein geringeres Gewicht für das Haushaltsgerät als bei Verwendung von zusätzlichen Versteifungsblechen oder dickeren Geräteaußenwänden. Die Flüssighaftmittelschicht bewirkt einen Ausgleich von Unebenheiten zwischen Vakuumisolationspaneel und Geräteaußenwand. So können auch sehr unebene, mit unter auch kostengünstigere Vakuumisolationspaneele verarbeitet werden. Durch die Verhinderung von Lufteinschlüssen erhöht sich die Energieeffizienz des Haushaltsgeräts.

Die aufschäumbare Wärmeisolationsmaterialschicht bzw. ein Schaumsystem kann vorzugsweise von einer Polyurethan-Schaumschicht gebildet werden. Polyurethan-Schaumschichten werden im allgemeinen gebildet auf Grundlage von Polyolen unter Zugabe von Polyisocyanaten, insbesondere Methylen-Diphenylen-di-Isocyanat (MDI), welches Gemisch durch ein Treibmittel, insbesondere Pentan, alternativ auch Mehtylenchlorid oder Kohlendioxid aufgeschäumt wird. Die meisten Polyole und Polyisocyanate reagieren bei Raumtemperatur nur mit mäßiger Geschwindigkeit miteinander. Gleiches gilt für die Reaktion von Polyisocyanat mit Wasser. Deshalb werden dem Reaktionsgemisch Aktivatoren d.h. Beschleuniger zugesetzt. Diese sind meistens tertiäre Amine, Organo-ZinnVerbindungen oder Alkalisalze aliphatischer Carbonsäuren, die besonders die Isocyanurat-Bildung fördern. Die bekanntesten Produkte sind Triethylamin, Dimethylcyclohexylamin, Dibutylzinndilaurat, Kaliumacetat. Die einzelnen Verbindungen aus der großen Zahl der Aktivatoren wirken sich zum Teil sehr unterschiedlich auf die aufgeführten Reaktionen aus. Dies kann genutzt werden, um den Reaktions- und Schäumverlauf den Anforderungen entsprechend zu steuern. So kann vorgesehen sein, dass für das erfindungsgemäße Vorschäumen ein langsam treibendes Schaumsystem eingesetzt wird. Gegenüber einem normal treibenden Schaumsystem, das eine Fadenzeit von ca. 35 Sekunden aufweist, kann ein erfindungsgemäß langsam treibendes Schaumsystem eine Fadenzeit von ca. 3 Minuten, Insbesondere auch zwischen 1 und 5 Minuten aufweisen. Als Fadenzeit wird eine Abbindezeit des Reaktionsgemisches verstanden und zwar die Dauer ab Beginn der Reaktion bis sich aus dem Gemisch Fäden herausziehen lassen. Mit dieser gängigen Methode lässt sich die Abbindezeit sehr genau und einfach bestimmen.

Bei Bedarf kann das Schaumsystem mit erhöhter Dichte verarbeitet werden. Dadurch können insbesondere auch geringere Schaumschichtdicken als 3 mm realisiert werden.

Die Erfindung betrifft auch ein zugehöriges Verfahren zum Herstellen eines Verbundkörpers und eine Vorschäumform zur Durchführung des Verfahrens.

Das Verfahren zum Herstellen eines Verbundkörpers, aufweisend ein Vakuumisolationspaneel und eine Geräteaußenwand eines Kältegerätes, wies die Schritte auf, Einlegen der Geräteaußenwand in eine Vorschäumform; Anlegen eines Formrahmens an eine Innenseite der Geräteaußenwand; Aufbringen eines flüssigen Reaktionsgemisches auf die durch den Formrahmen begrenzen Innenseite der Geräteaußenwand; Einlegen des Vakuumisolationspaneels in das flüssige Reaktionsgemisch, zur Bildung der Wärmeisolationsmaterialschicht; Schließen der Vorschäumform durch Auflegen einer Deckplatte auf den Formrahmen; Geschlossenhalten der Vorschäumform, bis das flüssige Reaktionsgemisch vollflächig entlang einer der Innenseite der Geräteaußenwand zugewandten Frontseite des Vakuumisolationspaneel und dessen Seitenwände verteilt und ausgehärtet ist.

Zur Durchführung des Verfahrens kann die Vorschäumform einen Boden zum Auflegen einer Geräteaußenwand, eine Deckplatte zum Schließen der Vorschäumform und einen zwischen Boden und Deckplatte angeordneten Formrahmen aufweisen.

Zwischen Boden und Deckplatte kann von Außen an den Formrahmen angrenzend, insbesondere an zwei gegenüberliegenden Außenseiten des Formrahmens ein Aufnahmehohlraum geschaffen sein. Der Aufnahmehohlraum bzw. die Aufnahmehohlräume dienen dazu bereits umgebogene Falzkanten der Geräteaußenwand in der Vorschäumform aufnehmen zu können. Oftmals sind beispielsweise eine linke Geräteaußenwand und eine rechte Geräteaußenwand verschieden, insbesondere spiegelbildlich, gestaltet, so dass bspw. eine frontseitige umgebogene Falzkante einmal linksseitig und einmal rechtsseitig an der Geräteaußenwand ausgebildet ist. Um dieselbe Vorschäumform für beide Bauformen von Geräteaußenwänden nutzen zu können, weist die Vorschäumform die erfindungsgemäßen Aufnahmehohlräume auf.

Die Vorschäumform kann zum lösbaren Einsetzen von Formrahmen unterschiedlicher Größe ausgebildet sein. Der Formrahmen gibt dabei die seitlichen Grenzen der zwischen geschäumten Schaumschicht vor. Die seitlichen Grenzen der zwischen geschäumten Schaumschicht ergibt sich aus den Dimensionen des Vakuumisolationspaneels plus der Schichtdicke der Schaumschicht, wie beispielsweise 2 mal 3 Millimeter, also ein Übermaß von insgesamt 6 Millimeter.

Alternativ kann die Vorschäumform zum Einlegen von Zwischenriegeln, welche die wirksame Größe des Formrahmens verkleinern, ausgebildet sein. Die ist dann sinnvoll, wenn die benötigte Größe für das Umschäumen des Vakuumisolationspaneels kleiner aus die Gesamtgröße des Formrahmens ist. Durch ein Einlegen von erfindungsgemäßen Zwischenriegeln sind zusätzliche kleinere Formrahmen entbehrlich.

Da üblicherweise einfache geometrische Grundformen von Vakuumisolationspaneelen verarbeitet werden, kann man mit einer einzigen Vorschäumform auskommen, in dem lediglich deren Länge und/oder Breite variabel einstellbar gestaltet wird.

Eine Ausführungsform der Erfindung ist an Hand eines in den Figuren beispielhaft dargestellten Kältegeräts für Haushaltszwecke und einer Vorschäumform beschrieben. Aus der detaillierten Beschreibung dieses konkreten Ausführungsbeispiels ergeben sich auch weitere generelle Merkmale und Vorteile der vorliegenden Erfindung.

Es zeigen:
- Figur 1: eine perspektivische Ansicht eines Kältegeräts für Haushaltszwecke nach dem Stand der Technik;
- Figur 2: eine explodierte Darstellung des Korpus 2, nach dem Stand der Technik, mit einem zwischengefügten Vakuumisolationspaneel;
- Figur 3: eine Querschnittsansicht durch das Kältegerät 1, nach dem Stand der Technik;
- Figur 4a: eine Schnittdarstellung einer erfindungsgemäßen Vorschäumform;
- Figur 4b: eine vergrößerte Darstellung eines Ausschnitts aus der Schnittdarstellung nach Fig. 4a.

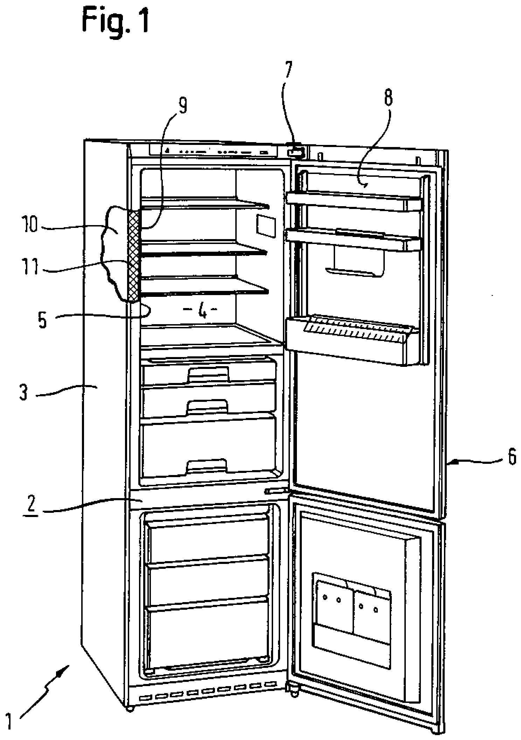

Ein Kältegerät 1 für Haushaltszwecke gemäß Fig. 1 weist einen schrankförmigen Korpus 2, dessen Geräteaußenwand 3 einen Innenraum 4 des Kältegerätes 1 begrenzen. Eine frontseitige Öffnung 5 des Korpus 2 ist mittels einer Tür 6 verschließbar. Die Tür 6 ist über Scharnieranordnungen 7 um eine vertikale Achse schwenkbar an dem Korpus 2 gelagert. Die Tür 6 weist eine in der geschlossenen Position dem Innenraum 4 zugewandte Innenseite 8 auf. In einem zwischen Geräteaußenwand 3 und einem Innenbehälter 9 ausgebildeten Hohlraum 10 ist eine Isolationsschicht 11 zu Wärmeisolationszwecken eingeschäumt.

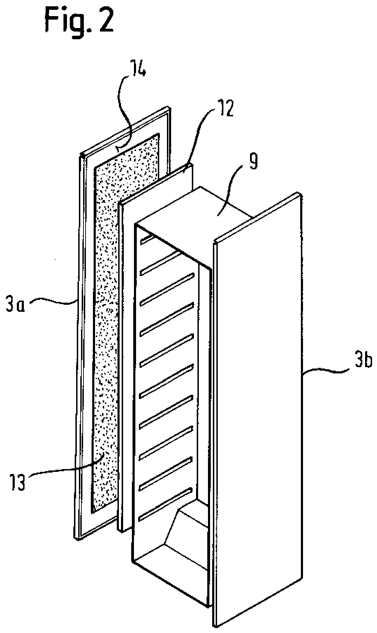

Das Kältegerät 1 aus Fig. 1 ist in Fig. 2 in einer explodierten Darstellung gezeigt. Fig.2 zeigt den Innenbehälter 9 mit zwei gegenüberliegenden seitlichen Geräteaußenwänden 3a und 3b, sowie beispielhaft ein zwischen der in Fig. 2 links dargestellten Geräteaußenwand 3a und dem Innenbehälter 9 angeordnetes Vakuumisolationspaneel 12. Das Vakuumisolationspaneel 12 ist mittels einer Schaumschicht 13 an einer Innenseite 14 der Geräteaußenwand 3a angeschäumt.

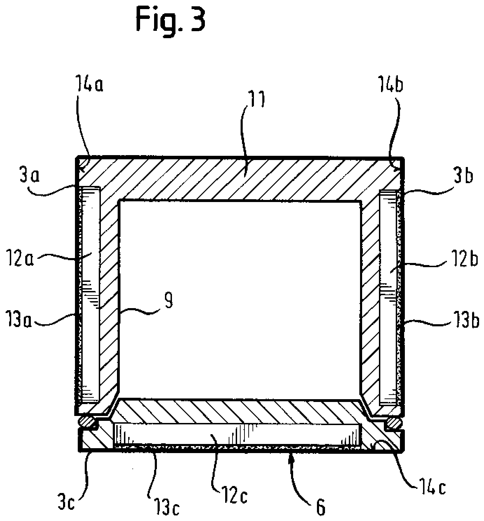

Wie in Fig. 3 in einer Querschnittsansicht durch das Kältegerät 1 gezeigt, kann eine erste Geräteaußenwand 3a durch eine in Fig. 3 links dargestellte Geräteaußenwand 3 gebildet werden. Demgemäß kann eine zweite Geräteaußenwand 3b durch eine in Fig. 3 rechts dargestellte Geräteaußenwand 3 gebildet werden. Eine dritte Geräteaußenwand 3c kann beispielsweise auch von der Tür 6 des Kältegeräts 1 gebildet werden. Zwischen dem Innenbehälter 9 und den Geräteaußenwänden 3a und 3b ist die Isolationsschicht 11 eingeschäumt. Der ersten Geräteaußenwand 3a ist ein erstes Vakuumisolationspaneel 12a zugeordnet. Das erste Vakuumisolationspaneel 12a ist im Bereich der Innenseite 14a der Geräteaußenwand 3a angeordnet. Das Vakuumisolationspaneel 12a ist mittels einer ersten Schaumschicht 13a an die Innenseite 14a der ersten Geräteaußenwand 3a angeschäumt. Der zweiten Geräteaußenwand 3b ist ein zweites Vakuumisolationspaneel 12b zugeordnet. Das zweite Vakuumisolationspaneel 12b ist im Bereich der Innenseite 14b der Geräteaußenwand 3b angeordnet. Das Vakuumisolationspaneel 12b ist mittels einer zweiten Schaumschicht 13b an die Innenseite 14b der zweiten Geräteaußenwand 3b angeschäumt. Eine dritte Geräteaußenwand 3c ist an der Tür 6 ausgebildet. Dieser türseitigen dritten Geräteaußenwand 3c ist ein drittes Vakuumisolationspaneel 12c zugeordnet. Das dritte Vakuumisolationspaneel 12c ist im Bereich der Innenseite 14c der Geräteaußenwand 3c angeordnet. Das Vakuumisolationspaneel 12c ist mittels einer dritten Schaumschicht 13c an die Innenseite 14c der dritten Geräteaußenwand 3c angeschäumt.

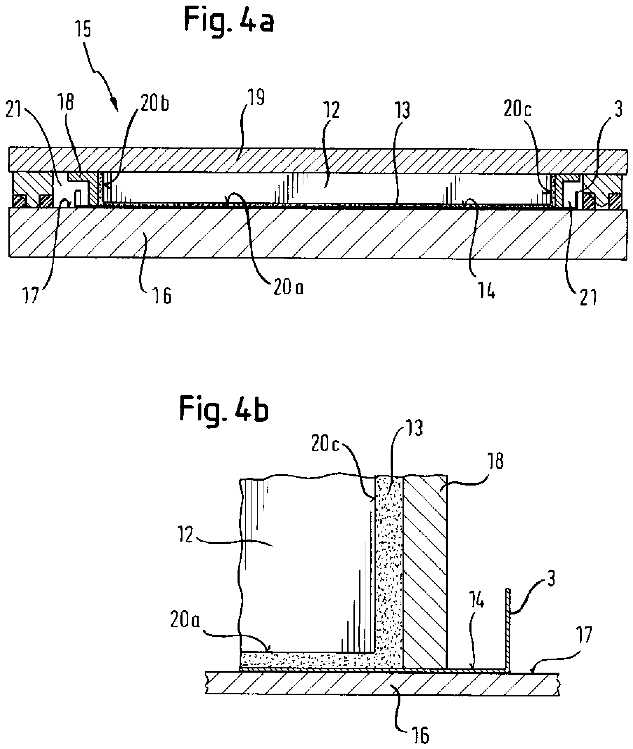

In Fig. 4a ist eine erfindungsgemäße Vorschäumform 15 gezeigt. Die Vorschäumform 15 weist einen Boden 16 auf. Der Boden 16 ist quaderförmig mit einer ebenen Oberseite 17 gestaltet. Auf den Boden 16 wird die Geräteaußenwand 3 mit ihrer sichtbaren Außenseite auf die Oberseite 17 des Bodens 16 aufgelegt. Anschließend wird ein Formrahmen 18 auf die Innenseite 14 der Geräteaußenwand 3 aufgelegt. Der Formrahmen 18 kann von einem vorzugsweise rechteckigen umfangsmäßig geschlossenem Winkelprofil gebildet werden. Der Formrahmen 18 weist um die Dicke der Schaumschicht 13 größere Abmaße als das anzuschäumende Vakuumisolationspaneel 12 auf. Nach dem Einbringen der flüssigen, reaktionsfähigen Schaumschicht 13 und dem Auflegen des Vakuumisolationspaneels 12 wird die Vorschäumform 15 durch eine Deckplatte 19 verschlossen. Bei geschlossener Deckplatte 19 schreitet der Reaktionsvorgang fort, bis der Zwischenraum zwischen Vakuumisolationspaneel 12 und Geräteaußenwand 3, bzw. Formrahmen 18 mit der Schaumschicht 13 gefüllt ist. Durch Verwendung einer größeren Menge an flüssigem, reaktionsfähigem Material kann eine Schaumschicht 13 mit erhöhter Dichte erzeugt werden. Die Schaumschicht 13 verteilt sich in der Vorschäumform 15 entlang einer Frontseite 20a und zweier gegenüberliegender Seitenwände 20b und 20c des Vakuumisolationspaneels 12. In zwei gegenüberliegende Aufnahmehohlräume 21 ragen in einem Winkel abgebogene Kanten der Geräteaußenwand 3. Die Aufnahmehohlräume 21 weisen eine lichte Weite auf, durch die unterschiedlich dimensionierte Geräteaußenwände 3 mit verschiedenen abgebogenen Kanten in dieselbe Vorschäumform 15 eingesetzt werden können. Insbesondere können zwei unterschiedliche, spiegelbildlich gestaltete Geräteaußenwände 3 in der selben Form angeschäumt werden. In Fig. 4b ist ein Ausschnitt aus der Fig. 4a vergrößert nochmals dargestellt.

## Patentansprüche

1. Haushaltsgerät, insbesondere Kältegerät (1), aufweisend einen Korpus (2) mit einem Innenbehälter (9) und Geräteaußenwänden (3, 3a, 3b, 3c), sowie einer dazwischen liegenden Isolationsschicht (11) mit mindestens einem eingelagerten Vakuumisolationspaneel (12, 12a, 12b, 12c), wobei das mindestens eine Vakuumisolationspaneel (12, 12a, 12b, 12c) mittels einer bezüglich der Isolationsschicht (11) separat ausgebildeten Flüssighaftmittelschicht an einer Innenseite (14) einer Geräteaußenwand (3, 3a, 3b, 3c) zumindest annähernd flächig befestigt ist, wobei die Flüssighaftmittelschicht als aufgeschäumte Wärmeisolationsmaterialschicht (13) ausgebildet ist, welche sich vollflächig über eine der Innenseite (14) der Geräteaußenwand (3, 3a, 3b, 3c) zugewandten Frontseite des Vakuumisolationspaneel (12, 12a, 12b, 12c) und dessen Seitenwände erstreckt.

2. Haushaltsgerät nach Anspruch 1, **dadurch gekennzeichnet, dass** die Flüssighaftmittelschicht sich vollflächig zwischen Vakuumisolationspaneel (12, 12a, 12b, 12c) und Innenseite (14) der Geräteaußenwand (3, 3a, 3b, 3c) erstreckt.

3. Haushaltsgerät Anspruch 1 oder 2, **dadurch gekennzeichnet, dass** die Flüssighaftmittelschicht eine Mindestdicke von 3 mm aufweist.

4. Haushaltsgerät nach einem der Ansprüche 1 bis 3, **dadurch gekennzeichnet, dass** die Flüssighaftmittelschicht als Polyurethan-Schaumschicht ausgebildet ist.

5. Verfahren zum Herstellen eines Haushaltsgerätes gemäß dem Anspruch 1, mit den Schritten:
- Einlegen der Geräteaußenwand (3, 3a, 3b, 3c) in eine Vorfixierform (15);
- Anlegen eines Formrahmens (18) an eine Innenseite (14) der Geräteaußenwand (3, 3a, 3b, 3c);
- Aufbringen eines flüssigen Reaktionsgemisches zur Bildung einer aufschäumbaren Flüssighaftmittelschicht (13) auf die durch den Formrahmen (18) begrenzten Innenseite (14) der Geräteaußenwand (3, 3a, 3b, 3c);
- Einlegen des Vakuumisolationspaneels (12, 12a, 12b, 12c) in das flüssige Reaktionsgemisch;
- Schließen der Vorfixierform (15) durch Auflegen einer Deckplatte (19) auf den Formrahmen (18);
- Geschlossenhalten der Vorfixierform (15), bis das flüssige Reaktionsgemisch vollflächig entlang einer der Innenseite (14) der Geräteaußenwand (3, 3a, 3b, 3c) zugewandten Frontseite (20a) des Vakuumisolationspaneel (12, 12a, 12b, 12c) und dessen Seitenwände (20b, 20c) verteilt und ausgehärtet ist.

6. Verfahren nach Anspruch 5, **dadurch gekennzeichnet, dass** die Vorfixierform (15) einen Boden (16), eine Deckplatte (19) und einen Formrahmen (18) aufweist, wobei eine Geräteaußenwand (3, 3a, 3b, 3c) auf den Boden (16) aufgelegt wird, die Vorschäumform (15) mit der Deckplatte (19) verschlossen wird, und der Formrahmen (18) zwischen Boden (16) und Deckplatte (19) angeordnet wird.

7. Verfahren nach Anspruch 6, **dadurch gekennzeichnet, dass** zwischen Boden (16) und Deckplatte (19) von Außen an den Formrahmen (18) angrenzend, insbesondere an zwei gegenüberliegenden Außenseiten des Formrahmens (18) ein Aufnahmehohlraum (21) geschaffen wird.

8. Verfahren nach einem der Ansprüche 5 bis 7, **dadurch gekennzeichnet, dass** die Vorschäumform (15) zum lösbaren Einsetzen von Formrahmen (18) unterschiedlicher Größe ausgebildet ist.

9. Verfahren nach einem der Ansprüche 5 bis 7, **dadurch gekennzeichnet, dass** die Vorschäumform (15) zum Einlegen von Zwischenriegeln, welche die wirksame Größe des Formrahmens (18) verkleinern, ausgebildet ist.

## Claims

1. Household appliance, in particular a refrigerator (1), having a carcass (2) with an inner container (9) and appliance outer walls (3, 3a, 3b, 3c) and an insulation layer (11) therebetween with at least one embedded vacuum insulation panel (12, 12a, 12b, 12c), wherein the at least one vacuum insulation panel (12, 12a, 12b, 12c) is fixed to an inner face (14) of an appliance outer wall (3, 3a, 3b, 3c) in an at least approximately planar manner by means of a liquid adhesive layer which is embodied separately with respect to the insulation layer (11), wherein the liquid adhesive layer is embodied as a foamed thermal insulation material layer (13) which extends over the entire surface of a front face of the vacuum insulation panel (12, 12a, 12b, 12c) facing the inner face (14) of the appliance outer wall (3, 3a, 3b, 3c) and its side walls.

2. Household appliance according to claim 1, **characterised in that** the liquid adhesive layer (13) extends over the entire surface between the vacuum insulation panel (12, 12a, 12b, 12c) and the inner face (14) of the appliance outer wall (3, 3a, 3b, 3c).

3. Household appliance according to claim 1 or 2, **characterised in that** the liquid adhesive layer has a minimum thickness of 3 mm.

4. Household appliance according to one of claims 1 to 3, **characterised in that** the liquid adhesive layer is configured as a polyurethane foam layer.

5. Method for producing a household appliance according to claim 1, having the steps:
- inserting the appliance outer wall (3, 3a, 3b, 3c) into a prefixing mould (15);
- positioning a mould frame (18) on an inner face (14) of the appliance outer wall (3, 3a, 3b, 3c);
- applying a liquid reaction mixture to form a foamable liquid adhesive layer (13) on the inner face (14) of the appliance outer wall (3, 3a, 3b, 3c) bound by the mould frame (18);
- inserting the vacuum insulation panel (12, 12a, 12b, 12c) into the liquid reaction mixture;
- closing the prefixing mould (15) by positioning a cover plate (19) on the mould frame (18);
- keeping the prefixing mould (15) closed until the liquid reaction mixture is distributed over the entire surface along a front face (20a) of the vacuum insulation panel (12, 12a, 12b, 12c) facing the inner face (14) of the appliance outer wall (3, 3a, 3b, 3c) and its side walls (20b, 20c) and has hardened.

6. Method according to claim 5, **characterised in that** the prefixing mould (15) has a base (16), a cover plate (19) and a mould frame (18), wherein an appliance outer wall (3, 3a, 3b, 3c) is placed on the base (16), the prefoaming mould (15) is closed with the cover plate (19) and the mould frame (18) is disposed between the base (16) and the cover plate (19).

7. Method according to claim 6, **characterised in that** a holding cavity (21) is created between the base (16) and the cover plate (19) adjacent to the mould frame (18), in particular to two opposing outer faces of the mould frame (18), from the outside.

8. Method according to one of claims 5 to 7, **characterised in that** the prefoaming mould (15) is configured for the detachable insertion of mould frames (18) of different sizes.

9. Method according to one of claims 5 to 7, **characterised in that** the prefoaming mould (15) is configured for the insertion of intermediate transoms, which reduce the effective size of the mould frame (18).

## Revendications

1. Appareil électroménager, en particulier appareil frigorifique (1) présentant un bâti (2) comprenant un réservoir intérieur (9) et des cloisons extérieures de l'appareil (3, 3a, 3b, 3c), ainsi qu'une couche isolante (11) située entre celles-ci ayant au moins un panneau d'isolation sous vide intercalé (12, 12a, 12b, 12c), le au moins un panneau d'isolation sous vide (12, 12a, 12b, 12c) étant fixé au moins presque à plat contre le côté intérieur (14) d'une cloison extérieure de l'appareil (3, 3a, 3b, 3c) au moyen d'une couche d'un agent adhésif liquide réalisée séparément par rapport à la couche isolante (11), la couche d'un agent adhésif liquide étant réalisée en tant que couche en matière thermo-isolante (13) moussée, laquelle s'étend sur toute sa surface sur un côté frontal du panneau d'isolation sous vide (12, 12a, 12b, 12c) regardant le côté intérieur (14) de la cloison extérieure de l'appareil (3, 3a, 3b, 3c), et sur les cloisons latérales de celui-ci.

2. Appareil électroménager selon la revendication 1, **caractérisé en ce que** la couche d'un agent adhésif liquide s'étend sur toute la surface entre le panneau d'isolation sous vide (12, 12a, 12b, 12c) et le côté intérieur (14) de la cloison extérieure de l'appareil (3, 3a, 3b, 3c).

3. Appareil électroménager selon la revendication 1 ou 2, **caractérisé en ce que** la couche d'un agent adhésif liquide présente une épaisseur minimale de 3 mm.

4. Appareil électroménager selon l'une des revendications 1 à 3, **caractérisé en ce que** la couche d'un agent adhésif liquide est réalisée sous forme de couche de mousse de polyuréthane.

5. Procédé de fabrication d'un appareil électroménager selon la revendication 1, comprenant les étapes suivantes:
- placement de la cloison extérieure de l'appareil (3, 3a, 3b, 3c) dans un moule de préfixation (15);
- pose d'un encadrement de moule (18) sur un côté intérieur (14) de la cloison extérieure de l'appareil (3, 3a, 3b, 3c);
- application d'un mélange réactionnel liquide pour la formation d'une couche d'un agent adhésif liquide à mousser (13) sur le côté intérieur (14) de la cloison extérieure de l'appareil (3, 3a, 3b, 3c) délimité par l'encadrement de moule (18);
- placement du panneau d'isolation sous vide (12, 12a, 12b, 12c) dans le mélange réactionnel liquide;
- fermeture du moule de préfixation (15) par application d'une plaque de recouvrement (19) sur l'encadrement de moule (18);
- enfermement du moule de préfixation (15) jusqu'à ce que le mélange réactionnel liquide se répartisse et se durcisse sur toute la surface le long d'un côté frontal (20a du panneau d'isolation sous vide (12, 12a, 12b, 12c) regardant le côté intérieur (14) de la cloison extérieure de l'appareil (3, 3a, 3b, 3c) et des cloisons latérales (20b, 20c) de celui-ci.

6. Procédé selon la revendication 5, **caractérisé en ce que** le moule de préfixation (15) comprend un fond (16), une plaque de recouvrement (19) et un encadrement de moule (18), une cloison extérieure de l'appareil (3, 3a, 3b, 3c) étant déposée sur le fond (16), le moule de prémoussage (15) étant fermé avec la plaque de recouvrement (19), et l'encadrement de moule (18) étant disposé entre le fond (16) et la plaque de recouvrement (19).

7. Procédé selon la revendication 6, **caractérisé en ce qu'**une cavité de logement (21) est créée entre le fond (16) et la plaque de recouvrement (19) jouxtant de l'extérieur l'encadrement de moule (18), en particulier deux faces extérieures de l'encadrement de moule (18) situées l'une en face de l'autre.

8. Procédé selon l'une des revendications 5 à 7, **caractérisé en ce que** le moule de prémoussage (15) est réalisé de dimension différente pour l'insertion amovible de l'encadrement de moule (18).

9. Procédé selon l'une des revendications 5 à 7, **caractérisé en ce que** le moule de prémoussage (15) est réalisé pour la pose de verrous intermédiaires, lesquels réduisent la dimension fonctionnelle de l'encadrement de moule (18).
